# EUROPEAN PATENT APPLICATION

(11) **EP 4 756 758 A1**
(43) Date of publication of application: **10.06.2026**
(21) Application number: 24217297.1
(22) Date of filing: 03.12.2024
(51) Int. Cl.: G08B 13/187, G08B 13/196

(54) **SECURITY MONITORING SYSTEM AND METHOD FOR OPERATING THE SAME**

(71) Applicant: Verisure Sàrl, 1290 Versoix (CH)
(72) Inventor: Hackett, Nicolas, 1290 Versoix (CH); Piedbois, Julien, 1290 Versoix (CH)
(74) Representative: Hansson Thyresson AB

(57) **Abstract**

There is provided a method of operating a security monitoring system of a premises, the method comprising: detecting a person by an imaging means arranged to monitor an exterior part of the premises; and determining, by a radio-based sensing arrangement, if there is motion in an interior part of the premises. There is also provided a security monitoring system for monitoring a premises, the security monitoring system comprising: at least one imaging means arranged to monitor an exterior part of the premises; and at least one radio-based sensing arrangement for detecting human presence in an interior part of the premises, the radio-based sensing arrangement being configured to detect human presence in dependence on perturbations in radio signals.

## Description

### TECHNICAL FIELD

The present invention relates to a security monitoring system, and in particular a security monitoring system with video monitoring and radio-based sensing, and to methods of operating the same.

### BACKGROUND

Security installations that are or include security monitoring systems for monitoring premises (e.g. a building such as a home), often referred to as alarm systems, typically provide means for detecting the presence and/or actions of people at premises and reacting to detected events.

Commonly, such systems include sensors to detect opening and closing of doors and/or windows to provide a secure perimeter to the premises, creating one or more protected interior spaces, movement detectors to monitor spaces (both within and outside buildings) for signs of movement, microphones to detect sounds such as breaking glass, and image sensors to capture still or moving images of monitored zones. In particular, the sensors may be arranged to monitor an area of the premises (including an exterior area) and detect an unauthorized intruder entering or moving within or around the premises.

Such systems may be self-contained, with alarm indicators such as sirens and flashing lights that may be activated in the event of an alarm condition being detected. Alternatively, or additionally, such systems may be linked to a remote monitoring centre where, typically, human operators manage the responses required by different alarm and notification types.

Hence, the security monitoring systems can alert a user (e.g. a homeowner) or an operator (e.g. at a remote monitoring centre or at the emergency services) that an undesirable security or safety event has occurred. Accordingly, such security monitoring systems contribute to the safety and wellbeing of occupants of the protected premises, as well as safeguarding articles within the protected perimeter - which may of course not simply be limited to a house or dwelling but may also extend to the grounds of the house, protected by a boundary fence and gate, for example.

Embodiments of the present invention seek to provide enhanced security monitoring systems, and corresponding apps, methods and other implementations that improve the scope of security monitoring systems to address aspects of security and intruder detection as well as providing new functionality and methods.

### SUMMARY

The invention is defined by the appended independent claims. Additional features and advantages of the concepts disclosed herein are set forth in the description which follows, and in part will be obvious from the description, or may be learned by practice of the described technologies. The features and advantages of the concepts may be realized and obtained by means of the instruments and combinations particularly pointed out in the appended claims. These and other features of the described technologies will become more fully apparent from the following description and appended claims, or may be learned by the practice of the disclosed concepts as set forth herein.

In a first aspect, there is provided a method of operating a security monitoring system of a premises, the method comprising: detecting a person by an imaging means arranged to monitor an exterior part of the premises; and determining, by a radio-based sensing arrangement, if there is motion in an interior part of the premises. The method may further include performing one or more actions, optionally if one or more criteria are fulfilled. Such a method provides improved security monitoring because the method uses both indoor and outdoor sensors to determine whether an intruder may have entered the premises. Furthermore, the method can, in response to a detection of a person outside the premises, use the radio-based arrangement to detect any people inside the premises, thereby detecting if the person outside the premises enters the premises.

In some embodiments, the method comprises: transmitting, in response to the detection, an alert signal if it is determined that there is motion inside the premises. This may, for example, be an appropriate action if the system is in an armed state and/or the system knows that no one is supposed to be inside the premises.

In some embodiments, the method comprises determining if an authorized user has authenticated themselves, wherein the alert signal is transmitted if it is determined that there is motion in the interior part of the premises and no authorized user has authenticated themselves. Hence, the method only transmits an alert if the motion is likely to be due to an unauthorized person.

In some embodiments, the step of determining if an authorized user has authenticated themselves comprises: (i) using biometric recognition to identify an authorized user, optionally wherein the biometric recognition comprises face recognition, gait recognition, voice recognition, a retina or iris scan, a fingerprint scan, or any combination thereof; and/or (ii) determining if a user device associated with an authorized user has joined a local network of the premises; and/or (iii) determining a position of a user device associated with an authorized user; and/or (iv) determining an arm state of the security monitoring system; and/or (v) determining if a deactivation action has been performed, optionally wherein the deactivation action comprises: inputting of a deactivation code into a keypad or input means, and/or entering an authentication into a user device, and/or performing a disarming action of the security monitoring system.

In some embodiments, the step of determining if an authorized user has authenticated themselves is performed within a predetermined time period from when the person was detected by the imaging means. The predetermined time period may be set to correspond to a time typically taken for an authorized person to authenticate themselves (e.g. to open the door and input a deactivation code).

In some embodiments, the step of determining, by the radio-based sensing arrangement, if there is motion in the interior part of the premises is performed within a predetermined time period from when the person was detected by the imaging means.

In some embodiments, the method comprises transmitting a notification to a user device if it is determined that there is no motion in the interior part of the premises, or an authorized user has identified themselves. Even if there is no motion inside the premises, or the motion is likely due to an authorized person, the user may still wish to know (i.e. receive a notification) about the detected outside motion.

In some embodiments, the step of detecting the person comprises: detecting a movement; and determining, using one or more images from the imaging means, if said movement is caused by a human.

In some embodiments, the step of detecting motion comprises: detecting movement by a PIR sensor; and/or capturing a plurality of images by the imaging means, and recognizing a change in the captured images, optionally wherein the step of recognizing change comprises recognizing a movement.

In a second aspect, there is provided a security monitoring system for monitoring a premises, the security monitoring system comprising: at least one imaging means arranged to monitor an exterior part of the premises; and at least one radio-based sensing arrangement for detecting human presence in an interior part of the premises, the radio-based sensing arrangement being configured to detect human presence in dependence on perturbations in radio signals. The security monitoring system may also comprise a control unit for controlling and/or communicating with the imaging means and/or the radio-based sensing arrangement.

In some embodiments, the system is configured to perform the method according to the first aspect.

In some embodiments, the system further comprises a movement detector, wherein the imaging means is configured to capture or stream images in response to movement detection by the movement detector.

In some embodiments, the imaging means is a moving picture camera or a still image camera.

In some embodiments, the system further comprises an audio interface for capturing an audio.

In some embodiments, the system further comprises a user device configured to one or more of: communicate position data of the user device to the control unit, transmit input data provided by a user to the control unit, present data received from the control unit as notifications.

In some embodiments, the radio-based sensing arrangement comprises a plurality of nodes for transmitting and/or receiving the radio signals, wherein at least one of the nodes is an illuminator node configured to transmit one or more of the radio signals, and at least one of the nodes is a receiver node configured to receive the radio signals.

In some embodiments, the radio-based sensing arrangement comprises a processing unit configured to process the received radio signals to detect one or more perturbations.

In some embodiments, the radio signals are Wi-Fi signals, and the radio-based sensing arrangement is a Wi-Fi sensing arrangement.

### BRIEF DESCRIPTION OF THE DRAWINGS

In order to best describe the manner in which the above-described embodiments are implemented, as well as define other advantages and features of the disclosure, a more particular description is provided below and is illustrated in the appended drawings. Understanding that these drawings depict only exemplary embodiments of the invention and are not therefore to be considered to be limiting in scope, the examples will be described and explained with additional specificity and detail through the use of the accompanying drawings in which:
- Fig. 1: is a schematic front view of a premises with a security monitoring system according to embodiments;
- Fig. 2: is a schematic plan view of a premises with a security monitoring system according to embodiments;
- Fig. 3: is a schematic plan view of a premises with a radio-based sensing arrangement according to embodiments;
- Fig. 4a: is a schematic illustration of the principle underlying radio-based sensing;
- Fig. 4b: is a schematic illustration of the principle underlying radio-based sensing; and
- Fig. 5: is a flowchart of a method of operating a security monitoring system according to embodiments.

Further, in the figures like reference characters designate like or corresponding parts throughout the several figures. The first digit in the reference character denotes the first figure in which the corresponding element or part appears.

### DETAILED DESCRIPTION

Various embodiments of the disclosed methods and arrangements are discussed in detail below. While specific implementations are discussed, it should be understood that this is done for illustration purposes only. A person skilled in the relevant art will recognize that other components, configurations, and steps may be used without parting from the spirit and scope of the claimed invention.

Hereinafter, certain embodiments will be described more fully with reference to the accompanying drawings. It will be apparent to those skilled in the art that various modifications and variations can be made without departing from the inventive concept. Other embodiments will be apparent to those skilled in the art from consideration of the specification and practice disclosed herein. It is to be understood that elements and materials may be substituted for those illustrated and described herein, parts and processes may be reversed or omitted, certain features may be utilized independently, and embodiments or features of embodiments may be combined, all as would be apparent to the skilled person in the art.

The embodiments herein are provided by way of example so that this disclosure will be thorough and complete, and will fully convey the scope of the inventive concept, and that the claims be construed as encompassing all modifications, equivalents and alternatives of the present inventive concept which are apparent to those skilled in the art to which the inventive concept pertains. If nothing else is stated, different embodiments may be combined with each other.

Although reference may be made to directions (e.g. left, right, up, down, upper, lower) as shown in the figures, it will be appreciated that these references are purely for illustrative purposes, and that embodiments are not limited to such directions.

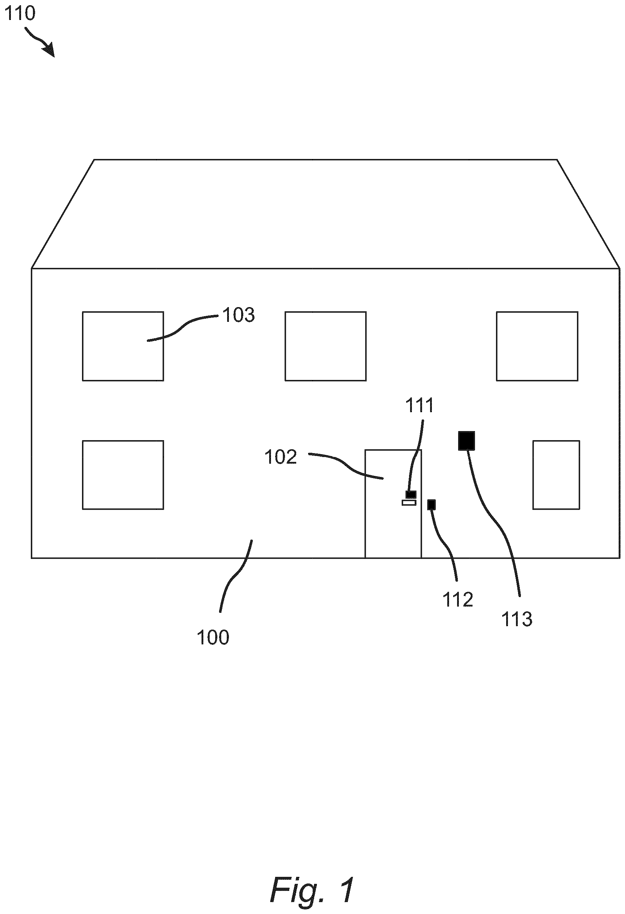

Fig. 1 shows a front view of a premises 100 protected by a security monitoring system 110 (which may also be referred to as an alarm system). The security monitoring system 110 is configured to monitor an interior and/or exterior area of the premises 100. In doing said monitoring, the security monitoring system 110 is configured to detect an alarm-incurring event such as an intruder entering the premises 100.

The premises 100 may be a residential building such as a house or an apartment, and/or a commercial building such as an office building, or the like. The premises 100 may have one or more exterior doors 102 and/or windows 103, such as the front door shown in Fig.1. The door 102 gives access to a protected interior of the premises 100. A door lock 111 may be provided on the exterior door 102, which may optionally be electrically controlled so that it can be locked and unlocked remotely. Optionally, as shown in Fig. 1, the façade of the house also carries an external keypad 112 by means of which a user can disarm the security monitoring system 110 and/or lock or unlock the door lock 111.

The security monitoring system 110 comprises an exterior imaging means 113, such as a camera (e.g. a video camera or a still image camera) or other image capturing device, configured to obtain still or moving images of an exterior of the premises. The exterior imaging means 113 may provide a live (video) stream of its field of view, or it may capture still or moving images.

The exterior imaging means 113 is arranged outside the building, i.e. at an exterior of the premises 100. The exterior imaging means 113 may be part of a video doorbell or may be provided as a stand-alone unit may be mounted to the façade or arranged remotely from the building (e.g. to include a part of the building in its field of view).

The exterior imaging means 113 may be associated with a movement detector, which may be separate from or may be integral with the exterior imaging means 113. The movement detector may be an infrared sensor such as a PIR sensor, a pixel movement sensor, a radar sensor, or any other suitable motion detection sensor.

The exterior imaging means 113 may be configured to be in an armed or disarmed state. In the armed state, the exterior imaging means 113 may be configured to capture or otherwise acquire images. In some embodiments, however, the exterior imaging means 113 may be configured to acquire images only when the movement detector has detected a movement, or it may be configured to capture or acquire images continuously. The exterior imaging means 113 may alternatively or additionally be configured to capture images in response to the audio interface capturing an audio signal.

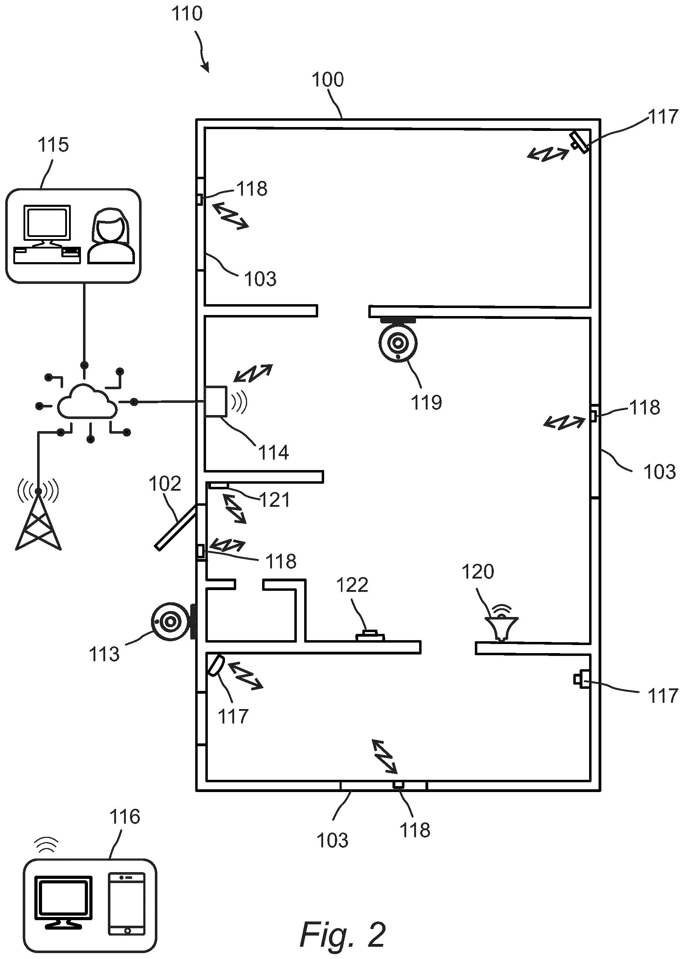

The exterior imaging means 113 may include an internal CPU, and/or be configured to communicate with a control unit 114 (shown in Fig. 2) of the security monitoring system 110 and/or a remote monitoring centre 115 (also shown in Fig. 2). In the case of the exterior imaging means 113 comprising an internal CPU, it may be configured to communicate directly with a user device 116 (shown in Fig. 2). In other cases, the exterior imaging means 113 may be configured to transmit data to the control unit 114, which in turn may be configured to communicate with the user device 116 and/or the remote monitoring centre 115.

Fig. 2 shows a schematic plan view of the premises 100 provided with the security monitoring system 110.

The security monitoring system 110 may include one or more interior sensors for detecting an intruder entering or moving within the premises 100. Such sensors may comprise one or more presence sensors 117, one or more perimeter sensors 118, one or more image sensors 119, or a combination of one or more thereof.

A presence sensor 117 may be defined as a sensor sensitive to the presence of persons and/or objects within an area monitored by the presence sensor. Presence sensors 117 may include motion or passage sensors sensitive to motion or passage of a person and/or object within the premises 100. The presence sensor 117 may thus comprise any type of sensor or detector capable of detecting presence, and/or movement of a person and/or object. For example, the presence sensor 117 may comprise a line-of-sight sensor, a radiation-based sensor for detecting an amount of incident radiation, or the like. In particular, the presence sensor(s) 117 may include an infrared sensor such as a thermal-MOS (TMOS) sensor and/or a passive infrared sensor (also referred to as a PIR sensor). Other examples of presence sensors 117 include photosensors, optical sensors, visual sensors, thermal sensors, radiation-based sensors and/or image capturing means such as a camera.

A perimeter sensor 118, on the other hand, may be defined as a sensor configured to detect persons and/or objects crossing or breaching a perimeter of the premises 100. Exemplary perimeter sensors 118 include magnetic sensors arranged at windows 103 and/or doors 102, and/or glass breakage sensors (such as a shock sensor) for detecting breakage of e.g. a window 103 or glass door 102.

An image sensor 119 may be defines as a sensor comprising imaging means, such as a camera (e.g. a photographic camera), video camera, and/or any other type of optical sensing device capable of capturing or acquiring one or more still and/or moving images of its field of view.

The security monitoring system 110 may further comprise one or more alarm indicators 120 such as a visual alarm indicator (e.g. a flashing light), an audible alarm indicator (e.g. a siren), or the like, that may be activated in the event of an alarm-incurring event being detected.

The security monitoring system 110 may also comprise a control unit 114 as previously mentioned. The control unit may also be referred to as a central unit. The control unit 114, which may generally be mains powered, is coupled or connected to the sensors and is configured to process received signals and determine a response. The sensors may, for example, be provided with wireless (e.g. via Wi-Fi, radio frequency, or the like) and/or wired communication means, such as a radio transceiver, for communicating with the control unit 114.

The control unit 114, which is typically mains powered, may include a processor and an alert triggering unit for providing an alert signal when the security monitoring system 110 is triggered or set off, e.g. when an alarm-incurring event has occurred.

The control unit 114 may be connected to input means 121 allowing a user to interact with the control unit 114. The input means 121 may be a keypad (either an exterior keypad 112 as shown in Fig. 1, or a keypad arranged inside the premises 100) or similar, for arming and disarming the sensors so as to arm and disarm the security monitoring system 110. In the illustrated embodiment, the input means 121 is arranged in the vicinity of the entrance door 102.

The control unit 114 may communicate with one or more user devices 116, which may be almost any kind of electronic device such as a smartphone, tablet, laptop or desktop computer, a smart watch, or even a television. For example, the control unit 114 may communicate with an app or other program installed on such user devices 116 allowing the user to interact with the control unit 114 and/or the security monitoring system 110. The user device 116 may also be loaded with a public land mobile network (PLMN) by means of which the control unit 114 (and/or the remote monitoring centre 115), may communicate with the user device 116. The user device 116, and in particular the app or program installed thereon, may thus form input means to the control unit 114 such that the user can, though the user device 116, instruct the control unit 114 to arm or disarm the security monitoring system 110, or the like. The user device 116 may also provide the user with information relating to a state of the security monitoring system 110 (e.g. if it is in an armed or disarmed state) and/or one or more of its sensors. The security monitoring system 110 may accordingly notify the user via the user device(s) 116 if and when the security monitoring system 110 is set off or triggered.

The app installed on the user device(s) 116 may be used to display still or video images captured by the one or more interior image sensors 119, exterior imaging means 113, or any other sensors, receiving audio from an audio interface 122 (as will be described later), provide position data of the user device 116 on which it is installed to the security monitoring system 110, transmit input data provided by a user to the security monitoring system 110, receive data or signals from the control unit 114 and present such data or signals as notifications (e.g. push notifications).

The control unit 114 may further be connected to the remote monitoring centre 115, which is located remotely from the premises 100. The control unit 114 may accordingly be configured to transmit alert signals to the remote monitoring centre 115, where operators (i.e. human operators) and/or computerised systems manage the alert signals and determines an appropriate action. That is, the control unit 114, typically located in the premises 100, is configured to process notifications and signals received from the sensors, and to notify the remote monitoring centre 115 of at least some of these signals that are indicative of an alarm-incurring event, depending upon the settings of the system and the nature of the detected events. In such a configuration, the control unit 114 at the installation is effectively acting as a gateway between the sensors and the remote monitoring centre 115.

The control unit 114 may be connected to the remote monitoring centre 115 by wires, such as a telephone line, or by a wireless telecommunications system such as GSM or other radio frequency systems. The connection may also be through the internet or any other suitable network.

Hence, operation of the security monitoring system 110 may be controlled by one or more of: the control unit 114, the remote monitoring centre 115, and a security monitoring app installed on the user device 116. For example, the remote monitoring centre 115, if provided, may receive one or more signals from any of the sensors. The remote monitoring centre 115 may transmit commands for controlling any one or more of: the arm state of the security monitoring system 110 (e.g. armed or unarmed), commanding a tripped alarm state to be signalled by the security monitoring system 110 (e.g. by triggering one or more alarm indicators 120 to generate alarm noise), and/or commanding operation of one or more functions of the sensors. Communication with the remote monitoring centre 115 may pass through the control unit 114. In other embodiments without the remote monitoring centre 115, or should communication with the remote monitoring centre 115 be interrupted, operation of the security monitoring system 110 may be controlled by the control unit 114. In yet other embodiments, the control unit 114 may be omitted, and the sensors may instead communicate independently with the remote monitoring centre 115, for example, via wireless communication (such as Cat-M LTE).

Howsoever the communication is implemented, the remote monitoring centre 115 may alert one or more operators of an alarm-incurring event. The one or more operators may monitor communications received from the security monitoring system 110. Thus, the one or more operators may, in response to an alert signal being transmitted, send a patrol unit and/or the emergency services to the premises 100 and/or notify an owner or resident of the premises 100.

The security monitoring system 110 may further comprise one or more audio interfaces 122, either in an exterior or an interior part of the premises 100. The audio interface 122 may comprise an audio input device, such as a microphone, configured to detect and/or record sound/audio in the environment where it is arranged. In some embodiments, the audio interface 122 is part of the exterior imaging means 113. Hence, the audio interface 122 allows a user to verbally communicate with the security monitoring system 110, e.g. to give instructions and/or to identify themselves using voice recognition.

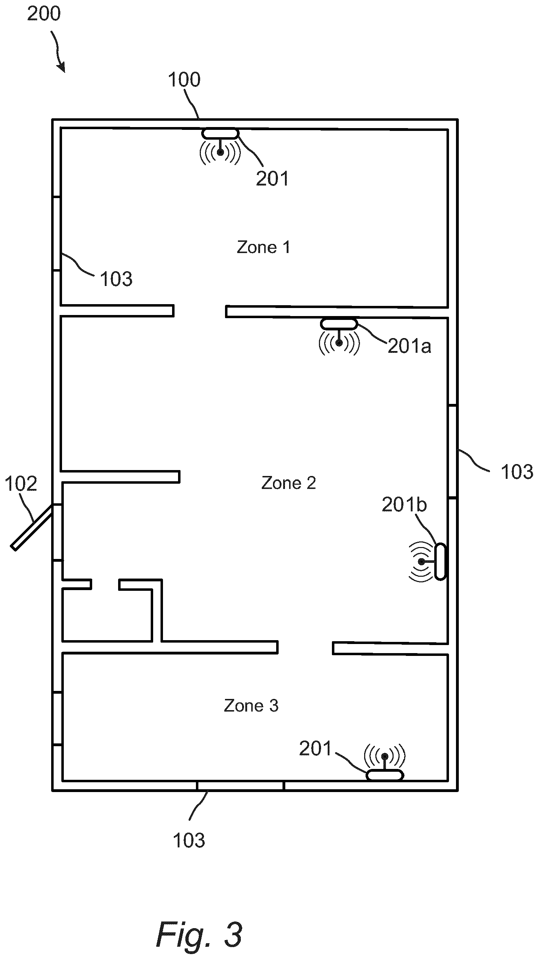

The security monitoring system 110 may further comprise, be connected to, or communicate with a radio-based sensing arrangement 200 for detecting presence or movement within the premises. Such a radio-based sensing arrangement 200 will now be described in relation to Figs. 3 to 4.

Fig. 3 shows the radio-based sensing arrangement 200 arranged in the premises 100. Note that, for illustrative purposes, the previously described devices of the security monitoring system 110 are not shown in Fig. 3.

The radio-based sensing arrangement 200 is configured to detect human presence throughout the premises 100. Accordingly, the radio-based sensing arrangement 200 may also be referred to as a radio-based presence sensing arrangement. In particular, the radio-based sensing arrangement 200 is configured to sense presence by detecting perturbations of radio signals received by the radio-based sensing arrangement 200.

A radio (or wireless) signal as used herein refers to a signal transmitted from a radio transmitter and received by a radio receiver, wherein the radio transmitter and radio receiver operate according to a standard or protocol. Such standards include, but are not limited to, IEEE 802.11. (which includes the Wi-Fi standards), IEEE 802.15 (which includes Zigbee), Bluetooth SIG, IEEE 802.16, IEEE 802.20, UMTS, GSM 850, GSM 900, GSM 180, GSM 19011, GPM ITU-R 5.13, GPM IT U-R 5.150, ITU-R 5.280, 3GPP 4G (including LTE), 3GPP 5G, 3GPP NR, AND IMT-2000. However, the radio transmitters and receivers may also operate in non-telecommunications or Industrial, Scientific and Medical (ISM) spectral regions without departing from the scope of embodiments.

The radio-based sensing arrangement 200 may, in addition to detecting presence, be configured to detect location (e.g. of humans) in dependence on the detected perturbations of the radio signals. For example, the radio-based sensing arrangement 200 may be configured to recognise different location "zones" which may map to rooms, floors, regions within rooms, and/or exterior regions of the premises such as a terrace, front garden, parking area, or the like.

The radio-based sensing arrangement 200 may further be configured to perform people counting. For example, the techniques and methods described in US2020/0302187A1, which is incorporated herein by reference in its entirety, can be used to count occupants and determine their locations in arrangements, systems and methods according to embodiments of the invention.

The radio-based sensing arrangement 200 comprises one or more nodes 201 distributed throughout the premises 100. At least one of the nodes 201 is capable of receiving radio signals, and may therefore be referred to as a receiver node 201a. Although only one receiver node 201a is shown in Fig. 3, it will be appreciated that the sensing arrangement 200 may comprise any number of receiver nodes 201a. The receiver node 201a may, in addition to receiving the radio signals, be configured to process the received radio signals to detect any perturbations, e.g. relative to a reference signal. Alternatively, the processing may be performed by a separate processing unit which may be located within the premises and/or remotely. Furthermore, the receiver node(s) 201a may be configured to function as an access point of the radio network whose signals are used by the radio-based sensing arrangement 200.

The remaining nodes 201 may each comprise a radio transmitter such that they can transmit radio signals, for instance to the receiver node 201a. Accordingly, the transmitting nodes 201 may illuminate the receiver node with their signals since the transmissions enable collection of information about the channel (or in other words, illuminates the channel). Such nodes may accordingly be referred to as illuminator nodes 201b. It will be noted that there are typically a plurality of illuminator nodes 201b for each receiver node 201a, and that a single receiver node 201a may be sufficient to perform radio-based sensing of the premises 100.

Of course, at least some of the nodes 201 may comprise a radio transceiver allowing them to both transmit and receive radio signals, i.e. to function as both an illuminator node 201b and a receiver node 201a. Similarly, a single device may comprise both an illuminator node 201b and a receiver node 201a.

To ensure that the radio-based sensing arrangement 200 effectively covers the whole area of interest (for example, one or more floors or regions of the premises 100), the radio-based sensing arrangement 200 comprises a sufficient number of suitably located and distributed illuminator nodes 201b so that the radio signals received by the receiver node 201a have effectively traversed the whole area of interest.

If the radio-based sensing arrangement 200 is to cover a plurality of floors, the sensing arrangement 200 may comprise one receiver node 201a on each floor, together with an appropriate number of suitably positioned illuminator nodes 201b. However, depending on the construction of the premises 100, signals from one or more illuminator nodes 201b on one floor may be used by a receiver node 201a on another floor.

Because radio transmitters and/or transceivers have a relatively high power-consumption, the nodes 201 are advantageously mains powered (optionally with a backup power supply in the form of a battery or the like) rather than solely battery powered. Accordingly, each of the nodes 201 (or at least some of the nodes 201) may be formed by a radio-capable device that is normally plugged into the mains.

The radio-based sensing arrangement 200 according to embodiments may be based on Wi-Fi signals. The radio-based sensing arrangement 200 may then be referred to as a Wi-Fi sensing arrangement. However, although reference will occasionally be made to such a Wi-Fi sensing arrangement, it will be appreciated that the illustrative examples and embodiments described herein may equally be applied to and/or include other sensing arrangements 200 based on any type of radio signals using any radio communications standard or protocol.

A sensing arrangement 200 based on Wi-Fi signals is particularly convenient because it can utilise Wi-Fi networks that are commonly already used and available in premises such as households or residential buildings. Furthermore, Wi-Fi capable devices, which are also commonly available in premises 100, can function as nodes 201 (and in particular as illuminator nodes 201b) in the Wi-Fi sensing arrangement. Examples of such Wi-Fi capable devices include smart plugs or smart sockets, smart bulbs, Wi-Fi access points, Wi-Fi routers, Wi-Fi range extenders (for example of the type that simply plug in to a socket of the mains electricity supply), smart speakers, smart doorbells, smart televisions, Wi-Fi enabled video cameras, or the like.

The Wi-Fi sensing arrangement may be based on any type of Wi-Fi network and/or topology, operating in different frequency bands (such as 2.4, 5, 6, and 60 GHz) and different bandwidths.

The Wi-Fi sensing may be performed with any Wi-Fi capable device and can be used on any available communication path. Each communication path between two Wi-Fi capable devices gives the chance to extract information about the surrounding environment. Because Wi-Fi networks typically have many devices connected to them and spread throughout the premises 100, they are well suited to exploiting these devices' transmissions to provide accurate sensing.

Depending on the number of devices, the Wi-Fi sensing arrangement may be monostatic, bistatic, or multi-static. In monostatic Wi-Fi sensing, a single device measures its own transmitted Wi-Fi signals (i.e. acts as both illuminator node 201b and receiver node 201a). In bistatic Wi-Fi sensing, the receiver node 201a and illuminator node 201b are formed by two different devices. In multi-static Wi-Fi sensing, the received signals from multiple illuminator nodes 201b are used to learn about a shared environment.

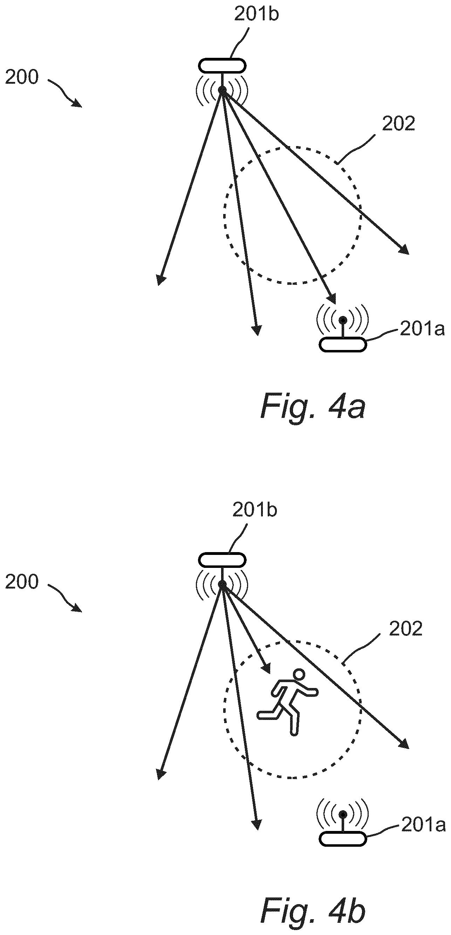

At least one illuminator node 201b and one receiver node 201a are required to perform sensing measurements, and these can be located in the same device (to create a kind of monostatic radar) or in different devices. In particular, the sensing is performed by a receiver node 201a on a signal transmitted by an illuminator node 201b and will be described further now in relation to Figs. 4a and 4b.

Figs. 4a and 4b show a schematic illustration of the idea behind radio-based sensing using a radio-based sensing arrangement 200, such as a Wi-Fi sensing arrangement. In Figs. 4a and 4b, a single illuminator node 201b and a single receiver node 201a are illustrated for simplicity, although in practice there will typically be a plurality of illuminator nodes 201b and sometimes a plurality of receiver nodes 201a. The radio-based sensing arrangement 200 of Figs. 4a and 4b is installed to monitor an interior area 202 of the premises 100.

Fig. 4a shows the radio-based sensing arrangement 200 in a default or reference state in which no person is present in the monitored area 202. In the absence of human presence, radio signals are transmitted from the illuminator node 201b, spread through the monitored area 202, and are received by the receiver node 201a.

Of course, in most installations there will be walls, ceilings, floors, and other structures that will tend to reflect, at least in part, signals transmitted from the illuminator node 201b. Furniture and other objects may block or attenuate the signals, the reflected signals will give rise to multiple paths, the signals may interfere with each other, and there may be scattering and other behaviours, such as phase shifts, frequency shifts, all leading to complexity in the channels experienced by the radio signals that arrive at the receiver node. But while the environment is static and unchanging, the receiver node 201a will tend to see a consistent pattern of radio signals. This is true whether or not the source transmits continuously or transmits periodically. However, this consistent pattern of received signals is changed by the arrival of a person, as shown in Fig. 4b.

From Fig. 4b it can be seen that the presence of a person in the monitored area 202 blocks or reflects at least some of the signals from the illuminator node 201b, and that affects the pattern of radio signals received by the receiver node 201a. The changed pattern of signals received by the receiver node 201a enables the presence of the person to be detected by a presence monitoring algorithm that is supplied with information derived from the received signals. It will be appreciated that the nature and extent of the perturbation of the signals passing from the illuminator node 201b to the receiver node 201a is likely to change as the person enters, passes through, and leaves the monitored area, and that this applies also to reflected, refracted, and attenuated signals. These changes may enable the location of a person within the monitored area 202, and their speed of movement, to be determined. Indeed, these techniques have been shown even to be capable of detecting gestures, and patterns of human respiration, as well as enabling "people counting".

It will be realised that signals that are received from an illuminator node 201b (or from more than one illuminator node 201b) after having passed through the monitored space 202 have in effect been filtered by the environment to which they have been exposed. The monitored area 202 or space can therefore be seen as a filter having a transfer coefficient, and the received signal is at least in part defined by the properties, or channel response, of the wireless channel through which it propagated. If the environment provided by the monitored area 202 changes, for example by the addition of a person, then the transfer coefficient of the filter, and the channel response or properties, will also change. The changes in the transfer coefficient, and in the channel response, consequent on the change in the environment of the monitored space 202, can be detected and quantified by analysing radio signals received by the receiver node 201a. Both the introduction of an object, e.g. a person, into the monitored space 202, and movement of that object within the monitored space 202 will change the environment and hence change the effective transfer coefficient and the channel response.

Accordingly, the presence detection by the radio-based sensing arrangement 200 may be based on analysing the signal dynamics and/or signal statistics of received radio signals and/or detecting changes in channel state information.

Essentially, radio signals are used to probe a zone or zones of interest, and to analyse and extract statistics from these signals. When Wi-Fi signals are used, i.e. when the radio-based sensing arrangement is a Wi-Fi sensing arrangement, a physical layer and/or data link layer such as MAC address measurements that expose the frequency response of a radio channel (e.g., CSI or RSSI measurements) may be measured and analysed.

These measurements or statistics are then processed to detect anomalies and variations (i.e. perturbations) over time, and in particular to detect changes signifying the entrance of a person and/or movement of a person within the monitored area 202.

Because presence is detected by detecting a change in the properties or character of radio signals compared to some previous reference signal(s), it is preferred to use illuminator nodes 201b that remain in the same position for extended periods rather than relying on devices that are repeatedly moved, such as smart phones, headphones, laptops, and tablet devices. As devices of the security monitoring system 110 are usually intended to always be connected to the same electrical outlet (if mains powered), these devices of the security monitoring system 110 (including the control unit 114) are particularly suitable to function as one of the nodes 201 in the radio-based sensing arrangement 200.

It is not strictly speaking essential for all the devices whose signals are used by the radio-based sensing arrangement 200 to be part of the same radio network. For example, signals from Wi-Fi access points of neighbouring premises could be used as part of a sensing arrangement in a different premises. Again, a primary consideration is the stability of the signals from the signal sources that are used.

Further, the radio-based sensing arrangement 200 can be trained to recognise specific perturbations corresponding to human presence. For example, the radio-based sensing arrangement 200 may be trained by establishing a base or reference setting in which the monitored area 202 is unoccupied, and then training occupied states by a person entering, standing, and then walking through each of the zones one by one. This process may be repeated with two people, and then optionally with more people. In essence this is a supervised machine learning approach, but other approaches to training may be used. The system may need to be retrained setting if bulky furniture or other large objects (particularly if made of metal) are added to or moved within the monitored space 202, because these can be expected to change the propagation properties of the relevant zone/space.

Although the example in Figs. 4a and 4b uses just a single illuminator node 201b and a single receiver node 201a, as already mentioned generally multiple illuminator nodes 201b will be used in order to achieve satisfactory coverage of the zone or zones to be monitored. Multiple zones may be monitored by a single receiver node 201a through the use of multiple strategically placed illuminator nodes 201b, but each zone, or some zones of multiples zones may have a dedicated receiver node 201a that does not serve other zones. Likewise, an illuminator node 201b may provide illuminating signals for a single monitored zone or for multiple monitored zones. Also, the radio-based sensing arrangement 200 may use a mesh network arrangement, for example a Wi-Fi mesh network, in which multiple devices act as receiver nodes, either for a single monitored zone or for multiple monitored zones.

Further explanation of a radio-based sensing arrangement 200, and in particular a Wi-Fi sensing arrangement, according to embodiments is described in WO2023/126426A1 which is incorporated herein by reference in its entirety.

In some embodiments, one or more of the sensors or other previously described devices of the security monitoring system 110 may comprise a radio transmitter allowing the one or more sensors or devices to function as respective one or more illuminator nodes 201b in the radio-based sensing arrangement 200. For instance, the one or more sensors or devices may be provided with a Wi-Fi transmitter such that they can form nodes of a Wi-Fi sensing arrangement. As an example, an image sensor 119 is often already provided with a Wi-Fi transmitter which is used to transmit images from the image sensor to the remote monitoring centre 115 and/or a user device 116. Hence, the image sensor 119 can, without major modification, be used for a second purpose as an illuminator node 201b of the Wi-Fi sensing arrangement.

The control unit 114 may also comprise a radio transceiver such that it can function as a receiver node 201a and/or illuminator node 201b of the radio-based sensing arrangement 200. In particular, the control unit 114 may function as a receiver node 201a and be configured to process the received radio signals to detect the above-described perturbances associated with human presence. In some embodiments, the control unit 114 is further configured to operate as an access point of the Wi-Fi network on which the Wi-Fi sensing arrangement is based.

It will be understood that the radio-based sensing arrangement 200 may be used to replace, complement and/or improve presence detection of the security monitoring system 110 which has conventionally only been performed by sensors of the security monitoring system 110. As such, the radio-based sensing arrangement 200 may be configured to notify a control unit 114 of the security monitoring system 110 whenever presence is detected (at least if the security monitoring system 110 is in an armed state).

Furthermore, the radio-based sensing arrangement 200 can be used to verify if an alert triggered by a sensor of the security monitoring system 110 corresponds to a "true" alarm-incurring event or is a "false alarm". For example, if another sensor is triggered by what could potentially be an intruder, the security monitoring system 110 may be configured to verify if an intruder is present in the premises 100 using the radio-based sensing arrangement 200. In particular, a control unit 114 acting as the receiving node 201a may instruct one or more of the illuminator nodes 201b to transmit a radio signal on which the verification may be made.

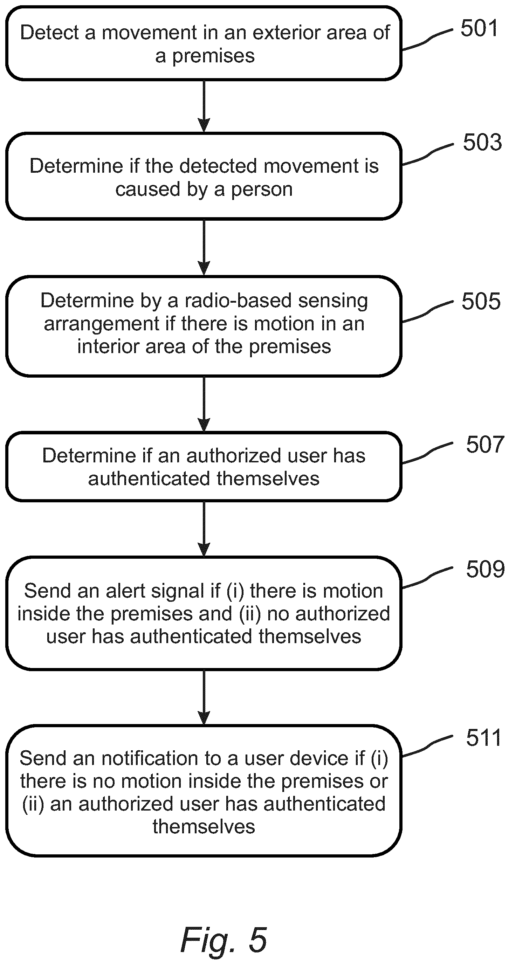

Fig. 5 shows a method of operating the security monitoring system 110 in conjunction with the radio-based sensing arrangement 200.

In step 501, a movement or motion is detected by the exterior imaging means 113 or a movement detector. In particular, the exterior imaging means 113, and/or a movement detector (such as the movement detector associated with the exterior imaging means 113), detects, in step 501, a movement or motion exterior to the premises 100. In response to said motion detection, the exterior imaging means 113 may be configured to start capturing or streaming images.

In some embodiments, step 501 comprises detecting motion by a motion detector (such as the motion detector, e.g. PIR sensor) which may be associated with the exterior imaging means 113 or provided separate from the exterior imaging means 113.

In some embodiments, step 501 additionally or alternatively comprises capturing a plurality of images by the imaging means 113, and recognizing a change between at least some of the captured images, wherein the change optionally corresponds to a movement. In other words, the movement detection may be made in dependence on changes in subsequent image frames captured by the exterior imaging means 113. This may, for example, be the case when the exterior imaging means 113 are configured to continuously (or always) capture or stream images.

In step 503, the security monitoring system 110 determines whether the detected movement is caused by a human or person. The determination may be made using images from (e.g. captured or streamed) the exterior imaging means 113. Suitable, and commonly known algorithms may be used for determining whether the movement is caused by a person.

If it is determined that the movement was caused by something else, such as an animal or another moving object (e.g. a vehicle or the like), the exterior imaging means 113 may be configured to stop capturing or streaming images, and the method may be concluded/restarted.

If, on the other hand, it is determined that the movement was caused by a person or human, the security monitoring system 110 may proceed to step 505.

In step 505, the security monitoring system 110 determines, using the radio-based sensing arrangement 200, if there is human presence and/or movement inside the premises 100 (or in other words, in an interior part of the premises 100). The determination is based on detected perturbations in radio signals received, and optionally transmitted, by the radio-based sensing arrangement 200. In some embodiments, the radio-based sensing arrangement 200 is configured to distinguish between human presence and/or movement and presence and/or movement caused by e.g. pets or the like.

The system may be configured to determine if there is presence and/or movement inside the premises 100, according to step 505, within a predetermined time from the motion detection of step 501 and/or the determination in step 503. The predetermined time may be set to correspond to (or be slightly longer than) a time typically taken for an intruder to enter or break into the property.

If no presence or movement is detected by the radio-based sensing arrangement 200 in step 505, the method may be concluded/restarted.

In step 507, the security monitoring system 110 determines if an authorized user has authenticated themselves. An authorized user may authenticate themselves using any number of authentication methods, depending on how the system is configured, as will be described below.

Similarly to step 505, the system may be configured to determine whether a user has authenticated themselves in step 507 within a predetermined time from the motion detection of step 501 and/or the determination in step 503.

In embodiments, step 507 may comprise performing biometric recognition to identify or authenticate an authorized user. The biometric recognition may comprise facial recognition and/or gait recognition (which may be made in dependence on images from the exterior imaging means 113 or any other image sensor 119 of the security monitoring system 110, either outside the premises or within the premises), voice recognition (which may be made in dependence on audio captured by the audio interface 122), performing of a retina or iris scan, performing of a fingerprint scan, or any combination thereof. In particular, the security monitoring system 110 may have been trained to recognize one or more biometrics of authorized user(s), and/or biometric data of authorized user(s) may have been entered into the security monitoring system 110 and labelled as authorized. To this effect, the security monitoring system 110 may be configured to store biometric identification information of authorized users in a memory unit. Alternatively, this information may be stored externally, e.g. on an external server or in the cloud. The biometric identification information may be biometrics data, gait data, voice samples, fingerprints, iris or retina characteristics, or the like.

In embodiments, step 507 may alternatively or additionally comprise determining if a user device 116 associated with an authorized user has joined a local network of the premises 100. For example, the system may determine whether a smart device associated with an authorized user has joined a local Wi-Fi network of the premises 100. This indicates that it is the authorized user that is detected by the exterior imaging means 113 and the radio-based sensing arrangement 200.

In embodiments, step 507 may yet alternatively or additionally comprise determining a position of a user device 116 associated with an authorized user. Such determination may for example be based on the geolocation of a smart device associated with an authorized user. If the user device 116 is determined to be within a predetermined area of the premises 100, this is indicative of the person detected by the exterior imaging means 113 and the radio-based sensing arrangement 200 being the authorized user. The predetermined area may be the plot of the premises 100, an inside area of the premises 100, a certain portion of the premises 100 such as the hallway or other space within which the radio-based sensing arrangement 200 is arranged.

In embodiments, step 507 may still yet alternatively or additionally comprise determining if a deactivation action has been performed by an authorized user. The deactivation action may include inputting a deactivation code into a keypad (such as the exterior keypad 112) or other input means 121 of the security monitoring system 110. The deactivation action may alternatively or additionally include a user entering an authentication into their user device 116, e.g. in response to a prompt or notification by the security monitoring system 110. The deactivation action may alternatively or additionally include a disarming action of the security monitoring system 110 (e.g. changing the arm state of the system from an armed state to a disarmed state), whether performed at the premises 100 by use of the input means 121 or performed in an app or the like installed on the user device 116.

In some embodiments, the system requires at least two, or even more, authentication methods to be performed in step 507 in order to determine that an authorized user has authenticated themselves.

Step 507 may additionally or alternatively include determining a current arm state of the security monitoring system 110 (e.g. whether the system is armed, disarmed, or in a armed-at-home state) and inferring from the arm state whether an authorized user has authenticated themselves. For example, if the security monitoring system 110 is (still) in an armed state a predetermined time after motion has been detected, it may be inferred that no user has authenticated themselves. As another example, if the security monitoring system 110 is in an armed-at-home state, or a disarmed state, it may be inferred that a user has authenticated themselves. Here it is noted that an armed-at-home state refers to a state where the security system is configured to detect breaches of a perimeter of the premises 100 (such as a door opening), but generally not movement within at least part of the premises (to allow residents to move to, say, the bathroom without triggering the alarm).

Depending on the outcome of the determinations in steps 505 and 507, the system may subsequently perform step 509 and/or 511.

If it is determined, e.g. within a predetermined time period from the detected movement outside of the premises in step 501, that (i) there is motion inside the premises in step 505 and (ii) no authorized user has authenticated themselves in step 507, the system sends an alert signal in step 509. In other words, the alarm is triggered by the system, because it is likely that an unauthorized intruder has entered the premises 100. This step may include transmitting the alert signal to the remote monitoring centre 115, sending an urgent notification to a user device 116 of an authorized user or other person associated with the premises 100, triggering the alarm indicator 120 arranged in the premises 100, or the like to alert a user or operator that an intruder has likely been detected.

If, on the other hand, it is determined that there is no motion inside the premises in step 505, or an authorized user has authenticated themselves in step 509, the system may be configured to take a less urgent action, such as sending a notification to a user device 116 of the authorized user in step 511. The system may thereafter repeat the method of Fig. 5 the next time a movement is detected by the exterior imaging means 113.

Although the exterior imaging means 113 have generally been referred to as a video camera, it will be appreciated that the exterior imaging means 113 may, in other embodiments, be a still picture camera or other imaging device. Instead of capturing or streaming a sequence of moving images, the still picture camera may be configured to capture still images. The remaining handling, analysis, calculations, determinations, triggerings, notifications and the like will still correspond to the above described, with possible adjustments for the image being a still image instead of a moving image, which adjustments would be familiar to the person skilled in the art.

Further, although the exterior imaging means 113 has been described as being proximal to a front of the building, it will be appreciated that the exterior imaging means 113 may alternatively or additionally cover a back or side of the buidling, or a garden, a shed, a secondary entrance, or the like.

The various embodiments described above are provided by way of illustration only and should not be construed to limit the invention. For example, the principles herein may be applied to any alarm system or security monitoring system, even if it only includes some of the sensors described. Those skilled in the art will readily recognize various modifications and changes that may be made to the present invention without following the example embodiments and applications illustrated and described herein, and without departing from the scope of the present disclosure.

Throughout this specification, the word "may" is used in a permissive sense (i.e. meaning having the potential to), rather than in the mandatory sense (i.e. meaning must).

Throughout this specification, the words "comprise", "include", and variations of the words, such as "comprising" and "comprises", "including", "includes", do not exclude other elements or steps.

As used throughout this specification, the singular forms "a", "an", and "the", include plural referents unless explicitly indicated otherwise. Thus, for example, reference to "an" element includes a combination of two or more elements, notwithstanding use of other terms and phrases for one or more elements, such as "one or more" or "at least one".

The term "or" is, unless indicated otherwise, non-exclusive, i.e. encompassing both "and" and "or". For example, the feature "A or B" includes feature "A", feature "B" and feature "A and B".

Unless otherwise indicated, statements that one value or action is "based on", "in response to" and/or "in dependence on" another condition or value or action, encompass both instances in which the condition or value or action is the sole factor and instances where the condition or value or action is one factor among a plurality of factors.

Unless otherwise indicated, statements that "each" instance of some collection have some property should not be read to exclude cases where some otherwise identical or similar members of a larger collection do not have the property, i.e. each does not necessarily mean each and every.

## Claims

1. A method of operating a security monitoring system of a premises, the method comprising:
detecting a person by an imaging means arranged to monitor an exterior part of the premises; and
determining, by a radio-based sensing arrangement, if there is motion in an interior part of the premises.

2. The method according to claim 1, wherein the method further comprises: transmitting, in response to the detection, an alert signal if it is determined that there is motion inside the premises.

3. The method according to claim 1, wherein the method further comprises determining if an authorized user has authenticated themselves, wherein the alert signal is transmitted if it is determined that there is motion in the interior part of the premises and no authorized user has authenticated themselves.

4. The method according to claim 3, wherein the step of determining if an authorized user has authenticated themselves comprises:
using biometric recognition to identify an authorized user, optionally wherein the biometric recognition comprises face recognition, gait recognition, voice recognition, a retina or iris scan, a fingerprint scan, or any combination thereof; and/or
determining if a user device associated with an authorized user has joined a local network of the premises; and/or
determining a position of a user device associated with an authorized user; and/or
determining an arm state of the security monitoring system; and/or
determining if a deactivation action has been performed, optionally wherein the deactivation action comprises: inputting of a deactivation code into a keypad or input means, and/or entering an authentication into a user device, and/or performing a disarming action of the security monitoring system.

5. The method according to claim 3 or 4, wherein the step of determining if an authorized user has authenticated themselves is performed within a predetermined time period from when the person was detected by the imaging means.

6. The method according to any preceding claim, wherein the step of determining, by the radio-based sensing arrangement, if there is motion in the interior part of the premises is performed within a predetermined time period from when the person was detected by the imaging means.

7. The method according to any preceding claim, wherein the method further comprises transmitting a notification to a user device if it is determined that there is no motion in the interior part of the premises, or an authorized user has identified themselves.

8. The method according to any preceding claim, wherein the step of detecting the person comprises:
detecting a movement; and
determining, using one or more images from the imaging means, if said movement is caused by a human.

9. The method according to claim 8, wherein the step of detecting motion comprises:
detecting movement by a PIR sensor; and/or
capturing a plurality of images by the imaging means, and recognizing a change in the captured images, optionally wherein the step of recognizing change comprises recognizing a movement.

10. A security monitoring system for monitoring a premises, the security monitoring system comprising:
a control unit;
at least one imaging means arranged to monitor an exterior part of the premises; and
at least one radio-based sensing arrangement for detecting human presence in an interior part of the premises, the radio-based sensing arrangement being configured to detect human presence in dependence on perturbations in radio signals.

11. The security monitoring system according to claim 10, wherein the system is configured to perform the method of any of claims 1 to 9.

12. The security monitoring system according to any one of claims 10 or 11,
wherein the system further comprises:
an audio interface for capturing an audio; and/or a user device configured to one or more of: communicate position data of the user device to the control unit, transmit input data provided by a user to the control unit, present data received from the control unit as notifications; and/or
a movement detector, wherein the imaging means is configured to capture or stream images in response to movement detection by the movement detector.

13. The security monitoring system according to any one of claims 10 to 12, wherein the radio-based sensing arrangement comprises a plurality of nodes for transmitting and/or receiving the radio signals, wherein at least one of the nodes is an illuminator node configured to transmit one or more of the radio signals, and at least one of the nodes is a receiver node configured to receive the radio signals.

14. The security monitoring system according to any one of claims 10 to 13, wherein the radio-based sensing arrangement comprises a processing unit configured to process the received radio signals to detect one or more perturbations.

15. The security monitoring system according to any one of claims 10 to 14, wherein the radio signals are Wi-Fi signals, and the radio-based sensing arrangement is a Wi-Fi sensing arrangement.
